(19) Europäisches Patentamt
European Patent Office
Office européen des brevets

(11) **EP 3 117 746 B1**

(12) **EUROPEAN PATENT SPECIFICATION**

(45) Date of publication and mention
of the grant of the patent:
**03.11.2021  Bulletin 2021/44**

(51) Int Cl.:
***A47J 36/02*** *(2006.01)*      ***A47J 37/06*** *(2006.01)*

(21) Application number: **15176968.4**

(22) Date of filing: **16.07.2015**

(54) **GRILL APPLIANCE PROVIDED WITH A NON-STICK COOKING PLATE AND MANUFACTURING METHOD THEREOF**

GRILLGERÄT MIT EINER NICHTHAFTENDEN KOCHPLATTE UND HERSTELLUNGSVERFAHREN DAFÜR

APPAREIL À GRILLER POURVU D'UNE PLAQUE DE CUISSON ANTI-ADHÉSIVE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.01.2017  Bulletin 2017/03**

(73) Proprietor: **ELECTROLUX PROFESSIONAL S.p.A.**
**33170 Pordenone (IT)**

(72) Inventors:
• **Raus, Dragan**
**33080 Porcia (PN) (IT)**
• **Tassan Mangina, Franco**
**33080 Porcia (PN) (IT)**
• **Fadelli, Marino**
**31014 Colle Umberto (IT)**

(74) Representative: **AWA Sweden AB**
**P.O. Box 45086**
**104 30 Stockholm (SE)**

(56) References cited:
**EP-A1- 1 712 167      FR-A1- 2 808 732**
**US-A- 5 753 313      US-A- 5 827 573**

• **None**

## Description

The present invention relates to a grill appliance provided with a non-stick cooking plate, and to a method for manufacturing such a non-stick cooking plate.

In particular, the grill appliance can advantageously be a double-sided electrical grill or a clamshell grill.

As it is known, a double-sided grill is a cooking appliance having a pair of metal heating plates, electrically heated and movable with respect to each other; food is cooked by thermal contact between the two plates. Usually, the lower plate is fixed on a base body, while the upper plate is carried by a movable cover, pivoted onto the base body, so as the food can be pressed between the two plates.

Double-sided grills permit relatively short cooking times and are hence commonly used in so-called "Quick Service Restaurants" that require cooking appliances characterized by high speed cooking capacity.

The cooking plates are usually made of metal materials, for example iron, steel or cast iron, and are provided with some non-stick coatings to avoid food sticking. In particular, it is the upper plate to require the better non-sticking capacity, in order to avoid that food sticks on the upper plate when the cover is opened at the end of a cooking cycle.

For example, it is known providing the cooking plates with non-sticking capacity by deposition of a PTFE (Teflon) coating.

The main drawback of the use of PTFE coatings is the progressive degradation of the PTFE layer, with the consequent decreasing of its non-sticking capacity. Degradation of the PTFE layer is mainly due to the abrasive action of sponges and scrapers that are commonly used for cleaning the plates and that quickly damage and remove the layer.

Another known method for increasing the non-sticking capacity of the cooking plates of a double-sided grill is the use of a thin PTFE sheet that is stretched along the peripheral edge of the plate to cover the plate surface. However, such PTFE sheets become rapidly dirty and need to be replaced (usually once a day); thus, the main disadvantages of using PTFE sheets are the cost of the sheets and the operator time required for replacement.

Moreover, in general the use of PTFE is limited to temperatures below 250°C, because if PTFE is overheated above 280°C it releases toxic fumes, very dangerous for the health of the operators.

Also known are other kinds of cooking plates for cooking appliances and specifically for double-sided grills, wherein the non-sticking capacity is improved by using metal coatings, in particular made of chromium.

For example, WO2008043127A1 discloses a cooking device with a cooking plate that is chromium coated to minimize food-sticking and maximize heat distribution on the cooking surface. The chromium coating is bonded to a steel layer that is further joined to an efficient heat distributor, such as aluminum.

Also US20010042448A1 discloses a chromium-covered dual surface cooking system.

Chromium coatings used in the above-mentioned documents have a mirror finish. In fact, it is commonly believed that a very smooth, polished surface is more effective in reducing adhesion and friction and, hence, to provide non-sticking properties.

Even such chromium-coated plates seem however to still have significant margins for improvement, especially in terms of performance, efficiency and ease of manufacture and specifically regarding non-sticking capacity.

EP1712167 describes a non-stick cooking utensil that can be used in a kitchen. The main characteristic of the non-stick cooking utensil lies in that the inner walls thereof are made to have a non-smooth surface with convex units.

US5753313 describes a method for coating metal cookware having a cooking surface including the steps of: roughening and cleaning the cooking surface of the abrasion and scratch resistance, and thermal transfer efficiency.

Accordingly, there is provided a grill appliance comprising the features of independent claim 1.

Advantageously the coating has an outer contact surface which defines an outer surface of the cooking plate and directly contacts, in use, the food to cook, this outer contact surface being a micro-rugged surface, having a micro-nodular morphology, with a roughness ranging between 0,5 $\mu$m and 5,0 $\mu$m, preferably between 0,6-1,2 $\mu$m.

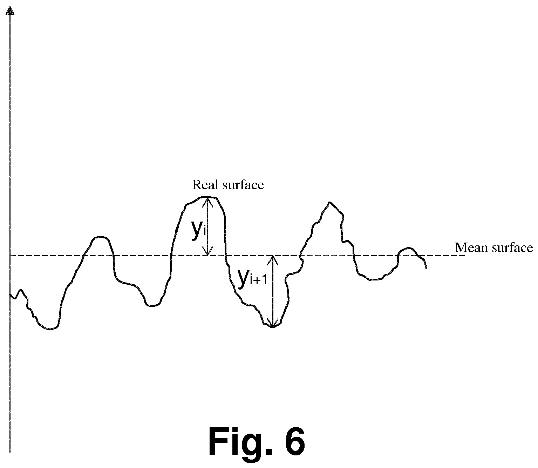

The roughness referred to in this application is calculated on a profile (line) of the real surface, using the following formula (with reference to Figure 6), wherein the roughness $R_a$ is the arithmetic average of the absolute values of the distance $y_i$ of the peaks of the real surface from a line representing the mean surface.

$$R_a = \frac{1}{n} \sum_{i=1}^{n} |y_i|$$

$R_a$ can be measured using a surface roughness tester commonly present in the market; for example it can be measured using the Surface roughness tester model "SR100" of the company "The L.S. Starret Company", or with one of the portable roughness testers of the series "Surftest SJ-210 Series" of the company "Mitutoyo America Corporation".

Advantageously the nodular chromium coating has a thickness of about 10-500 $\mu$m, preferably of about 10-100 $\mu$m.

Advantageously, the support plate is made of a metal material, preferably an iron-based material such as steel.

The surface of the support plate having the non-stick coating is a micro-corrugated surface, having corrugations on a micrometric scale. The coating has an inner coupling surface, opposite the outer contact surface and directly and intimately adhering to the surface of the support plate having the non-stick coating.

Advantageously the grill appliance comprises a base body and a movable cover, movable with respect to the base body, wherein the non-stick cooking plate is an upper cooking plate supported by the movable cover.

Preferably, the movable cover is pivotally mounted onto the base body by a hinge device.

Advantageously the base body is provided with a respective non-stick cooking plate.

The invention is also related to a method for manufacturing a non-stick cooking plate of a grill appliance according to claim 8.

Advantageously the support plate is made of a metal material, preferably an iron-based material such as steel.

The method according to the invention comprises, before the step of applying the nodular chromium coating, a step of roughening the surface of the support plate on which the nodular chromium coating has to be applied, to obtain a micro-corrugated, rugged surface, on which the nodular chromium coating is then deposited.

Advantageously the nodular chromium coating is deposited by chromium plating, preferably in an electrolytic bath, the surface of the support plate on which the nodular chromium coating has to be applied.

Preferably step of roughening is performed by blasting the surface on which the nodular chromium coating has to be applied, preferably with ceramic balls having a diameter of about 10-1000 $\mu$m and preferably of about 30-100 $\mu$m.

According to the invention, before the step of roughening the surface of the support plate on which the nodular chromium coating has to be applied, a step of hardening and a subsequent step of annealing the support plate so as to provide the surface on which the nodular chromium coating has to be applied with a hardness equal to or higher than about 40 HRc, and preferably in the range of about 40-60 HRc.

Preferably the step of hardening comprises carbonitriding the support plate in an oven and tempering the support plate.

Preferred aspects and further features of the invention are claimed in the dependent claims.

In general terms, the invention thus relates to the use in a grill appliance of a plate comprising a support plate and a non-stick nodular chromium coating made of nodular chromium.

The invention achieves several advantages, mainly in terms of performance:

- excellent capacity to prevent food from sticking on the cooking plate; in particular, the micro-nodular structure of the coating surface (resulting in a substantially peaks-and-valleys morphology) reduces, in use, the contact area between the cooking plate and the food (the contact being substantially limited to the peaks, or higher portions, of the coating); moreover, the valleys, or lower portions of the coating, define interstices that tend to fill with residues, mainly fat substances, from the food; it has been realized that once the interstices are filled, successive heating of the same cooking plate results in the formation of a sort of film of fat matter that further increases the non-sticking properties of the cooking plate;

- high abrasion and scratch resistance; in fact, the non-stick coating made of nodular chromium intimately and firmly adheres to the support material below, and cannot be easily removed nor damaged;

- high thermal transfer efficiency, since chromium has a good thermal conductivity;

- no degradation of non-sticking properties over time, because the nodular chromium coating does not get damaged and maintains its properties unaltered;

- easy cleaning: "nodular" structure of the nodular-chromium coating has a peaks-and-valleys morphology which reduces the contact surface between the food and the cooking plate; this makes easy the removal of the possible residues of food stuck to the cooking plate, and also prevents taste transfer among different foods;

- higher temperatures allowed with respect to PTFE coatings or sheets (up to 350°C, when PTFE is limited to about 250°C);

- low operating costs with respect to the use of PTFE sheets (since no PTFE sheets to buy and replace are needed);

- very small heat losses and energy saving: because of a low infrared emissivity, the nodular chromium coating radiates less heat than a standard iron plate (made of e.g. Fe 510); as a further consequence, there is also a more comfortable work environment for the operators.

The invention is further described by way of example in the following nonlimiting embodiments, with reference to the accompanying drawings in which:

- Figure 1 is a simplified, schematic perspective view of a grill appliance, in this advantageously example a double-sided grill, according to the invention;

- Figure 2 is a schematic, out-of-scale cross section view of a detail of a cooking plate of a grill appliance according to the invention;

- Figures 3 and 4 are surface microphotographs of respective embodiments of the cooking plates of a grill appliance according to the invention;

- Figure 5 is a schematic representation of the main steps (numbered 5A, 5B, 5C and 5D) of a method for manufacturing the cooking plate of a grill appliance according to the invention.

- Figure 6 is a schematic view illustrating a real surface and a mean surface used for the calculation of the surface roughness $R_a$ on a profile (or line).

In the following description the invention has been illustrated with particular reference to a double-sided grill; anyway it is underlined that the invention can be applied to any kind of grill appliance provided with one or more non-stick cooking plates.

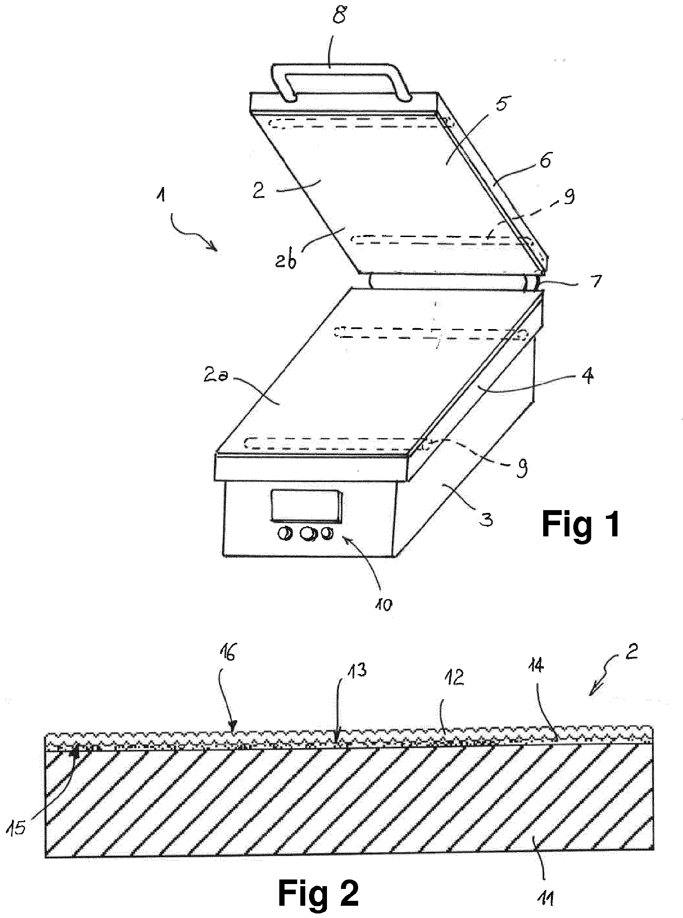

In Figure 1, it is indicated as a whole with reference numeral 1 a grill appliance, advantageously a clamshell grill, having at least one non-stick cooking plate 2.

The grill appliance 1 advantageously comprises a base body 3 with a lower casing 4, and a movable cover 5 with an upper casing 6. The cover 5 is advantageously pivotally mounted onto a rear portion of the base body 3, preferably by a hinge device 7, and has advantageously a front handle 8.

Of course, the appliance 1 can advantageously comprise a plurality of covers 5, arranged side-by-side and preferably hinged onto the base body 3 and independently movable with respect to one another; in this case, the base body 3 can advantageously extend to face all the covers 5, or include a plurality of lower casings 4 arranged to face respective covers 5.

One or more of the base body 3 and the cover 5 (both of them in the advantageous embodiment herewith described) are provided with respective non-stick cooking plates 2. Advantageously, the lower casing 4 and the upper casing 6 support a lower cooking plate 2a and an upper cooking plate 2b respectively. The cooking plates 2a, 2b substantially face each other when the cover 5 is closed, and are heated by respective, preferably electrical, heating devices 9 (known as such and shown only in a very schematic way in Figure 1), for example housed in the casings 4, 6 and operated preferably by a control device 10 arranged for example on a front face of the base body 3.

At least one of the cooking plates 2, in particular the upper cooking plate 2b, has the structure schematically shown in Figure 2. It is understood that, preferably, both the lower cooking plate 2a and the upper cooking plate 2b can have the structure depicted in Figure 2.

The cooking plate 2 comprises a substantially flat support plate 11 and a nodular chromium coating 12 on at least one surface 13 of the support plate 11.

The support plate 11 is made of a metal material, preferably an iron-based material (iron or iron alloy) such as steel, for example mild steel; a suitable material is for example Fe 510; the support plate 11 has for example a thickness of at least 8 mm, preferably of about 10-20 mm.

The support plate 11 comprises at least one surface portion 14, including the surface 13, which is hardened and annealed. The surface portion 14, in particular at least the surface 13, has a superficial hardness higher than about 40 HRc (Rockwell c scale), for example about 40-60 HRc, at least for a thickness of about 0,5-0,6 mm.

The surface 13 is a micro-corrugated, i.e. rough and/or rugged, surface, having corrugations on a micrometric scale (i.e. the corrugations have an height in the order of the microns, in particular less than 10 μm).

The surface 13 is coated by the coating 12.

In particular, the coating 12 is made of nodular chromium, i.e. the coating 12 is a layer of chromium having a micro-nodular structure/morphology. The coating 12 has an inner coupling surface 15 directly and intimately adhering to the surface 13 of the support plate 11; and an outer contact surface 16, opposite the inner coupling surface 15 and which defines an outer surface of the cooking plate 2 and directly contacts, in use, the food to cook.

The nodular chromium coating 12 has preferably a thickness of about 10-500 μm, in particular of about 10-100 μm, for example of about 40 μm.

The outer contact surface 16 is a micro-rugged surface, having advantageously a micro-nodular morphology, with a roughness ranging preferably between 0,5 μm and 5,0 μm, for example of about 0,6-1,2 μm (as a reference, the common mirror finishing chromium has usually a roughness of about 0,1 μm).

The nodular chromium coating 12 and specifically the outer contact surface 16 exhibit a nodular "hill-shaped", i.e. rugged, pattern that offers a limited surface of contact with the food while ensuring a good heat transfer.

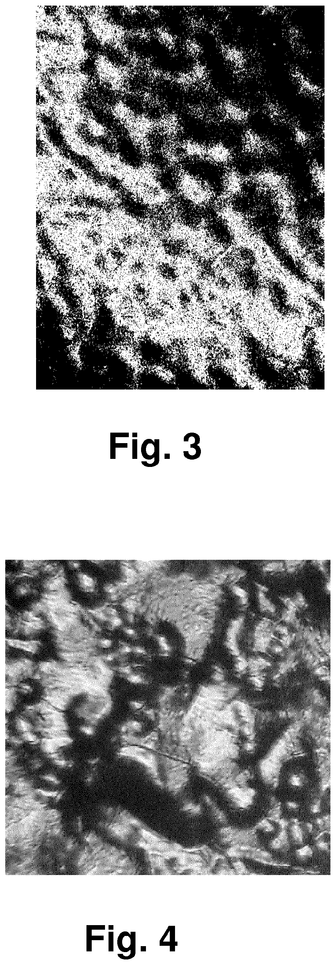

Examples of the micro-nodular morphology of the outer contact surface 16 are shown in Figures 3 and 4 (surface micro-photographs: Fig. 3 at 12 magnifications, Fig.4 at 20 magnifications).

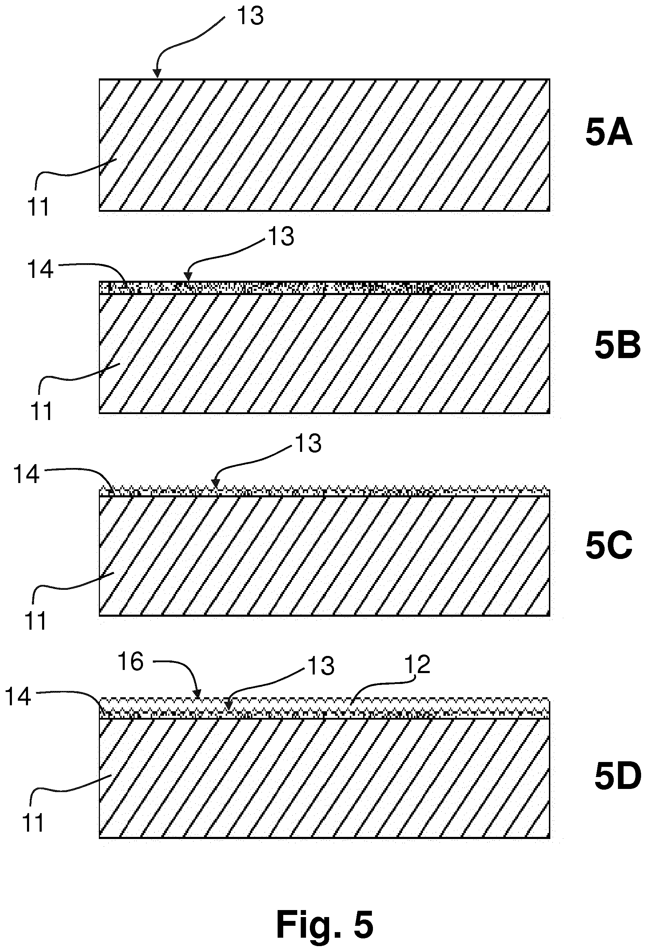

The cooking plate 2 is advantageously manufactured by the method described hereinbelow with reference to Figure 5.

The manufacturing method of the non-stick cooking plate 2 comprises the steps of:

- providing (step 5A) the support plate 11, made of a metal material, preferably made of an iron-based material (iron or iron alloy) such as steel, for example mild steel (e.g. Fe 510); the support plate 11 has preferably a thickness of at least 8 mm, for example of about 10-20 mm;
- subjecting (steps 5B-5D) at least the surface 13 of the support plate 11 to a metallurgical process to enhance non-stick properties and abrasion and scratch resistance of the surface 13.

According to the invention, the metallurgical process comprises the steps of:

1) Hardening (step 5B) the support plate 11, so as to provide at least the surface portion 14 and/or at least the surface 13 with a superficial hardness higher than 40 HRc (Rockwell), preferably in the range 40-60 HRc, at least for a thickness of about 0,5-0,6 mm.

For example, hardening of the surface portion 14 and the surface 13 may be obtained by:

- carbonitriding the support plate 11 in an oven at a temperature over 800°C and preferably about 900°C for a time of about 3-4 hours; the atmosphere inside the oven contains carbon and nitrogen in respective amounts enabling diffusion of carbon and nitrogen inside the surface of the support plate; and
- tempering the support plate 11: the support plate 11 is removed from the oven and then tempered, for example in cold oil.

2) Annealing the hardened support plate 11, advantageously at a temperature of about 300-380°C, preferably at about 350°C, to reduce internal stresses that can cause cracks. Preferably the annealing step is arranged in such a way to reduce the hardness to about 40-60 HRc, for example about 50-55 HRc.
3) Roughening (step 5C) the surface 13 to obtain a micro-corrugated, rugged surface, advantageously by blasting the surface 13; blasting is for example performed with ceramic balls having a diameter of about 10-1000 $\mu$m, preferably of about 30-100 $\mu$m and for example of about 60 $\mu$m.
4) Depositing (step 5D) onto the micro-corrugated surface 13 the nodular chromium coating 12, i.e. a layer of chromium having a micro-nodular structure/morphology, to form the outer contact surface 16.

The nodular chromium coating 12 is advantageously deposited by chromium plating, for example in an electrolytic bath, the micro-corrugated surface 13 of the support plate. As already mentioned, the nodular chromium coating 12 has preferably a thickness of about 10-500 $\mu$m, in particular of about 10-100 $\mu$m, for example of about 40 $\mu$m; and a roughness ranging between 0,5 $\mu$m and 5,0 $\mu$m, for example of about 0,6-1,2 $\mu$m.
No further finishing operations are required on the coating 12.
The cooking plate 2, comprising the support plate 11 and the coating 12, can then be mounted on the grill appliance 1.
Clearly, further changes may be made grill appliance and to the method for manufacturing its cooking plate described herein without, however, departing from the scope of the present invention as defined by the enclosed claims.

## Claims

1. A grill appliance (1) comprising at least a non-stick cooking plate (2) comprising a support plate (11) and a non-stick coating (12) on at least one surface (13) of the support plate (11), **characterized in that** the at least one surface (13) of the support plate (11) having said non-stick coating (12) is a micro-corrugated surface, having corrugations on a micrometric scale and the non-stick coating (12) is a nodular chromium coating (12), having a micro-nodular structure with a substantially peaks-and-valleys morphology, wherein the support plate (11) comprises at least one surface portion (14), including said surface (13) of the support plate (11) having said non-stick coating (12), which is hardened and annealed, and has a superficial hardness equal to or higher than about 40 HRc, preferably comprised in the range of about 40-60 HRc.

2. The grill appliance (1) according to Claim 1, wherein the coating (12) has an outer contact surface (16) which defines an outer surface of the cooking plate (2) and directly contacts, in use, the food to cook, said outer contact surface (16) being a micro-rugged surface, having a micro-nodular morphology, with a roughness ranging between 0,5 $\mu$m and 5,0 $\mu$m, preferably between 0,6-1,2 $\mu$m.

3. The grill appliance (1) according to one of the preceding Claims, wherein the nodular chromium coating (12) has a thickness of about 10-500 $\mu$m, preferably of about 10-100 $\mu$m.

4. The grill appliance (1) according to one of the preceding Claims, wherein the support plate (11) is made of a metal material, preferably an iron-based material such as steel.

5. The grill appliance (1) according to one of the preceding Claims, wherein said non-stick coating (12) has an inner coupling surface (15), opposite said outer contact surface (16) and directly and intimately adhering to said surface (13) of the support plate (11) having said non-stick coating (12).

6. The grill appliance (1) according to claim 2 or any of the preceding claims 3-5 when dependent on claim 2, comprising a base body (3) and a movable cover (5) movable with respect to the base body (3), wherein the non-stick cooking plate (2) is an upper cooking plate (2b) supported by the movable cover (5).

7. The grill appliance (1) according to Claim 6, wherein the base body (3) is provided with a respective non-stick cooking plate (2a).

8. A method for manufacturing a non-stick cooking plate (2) of a grill appliance (1) comprising the steps of providing a support plate (11), and applying a nodular chromium coating (12), having a micro-nodular structure with a substantially peaks-and-valleys morphology, on at least one surface (13) of the support plate (11) said method comprising, before the step of applying the nodular chromium coating (12), a step of roughening said surface (13) on which said nodular chromium coating (12) has to be applied, to obtain a micro-corrugated, rugged surface, on which the nodular chromium coating (12) is then deposited, said method comprising, before the step of roughening said surface (13) on which said nodular chromium coating (12) has to be applied, a step of hardening and a subsequent step of annealing the support plate (11) so as to provide said surface (13) on which said nodular chromium coating (12) has to be applied with a hardness equal to of higher than about 40 HRc, and preferably in the range of about 40-60 HRc.

9. The method according to Claim 8 wherein the support plate (11) is made of a metal material, preferably an iron-based material such as steel.

10. The method according to Claim 8 or 9, wherein the nodular chromium coating (12) is deposited by chromium plating, preferably in an electrolytic bath, said surface (13) of the support plate (11) on which said nodular chromium coating (12) has to be applied.

11. The method according to Claim 8 or 9 or 10, wherein the step of roughening is performed by blasting said surface (13) on which said nodular chromium coating (12) has to be applied, preferably with ceramic balls having a diameter of about 10-1000 $\mu$m and preferably of 30-100 $\mu$m.

12. The method according to one of Claims 8 to 11, wherein said step of hardening comprises carbonitriding the support plate (11) in an oven and tempering the support plate (11).


**Patentansprüche**

1. Grillgerät (1), umfassend mindestens eine nichthaftende Kochplatte (2), die eine Trägerplatte (11) und eine Antihaftbeschichtung (12) auf mindestens einer Oberfläche (13) der Trägerplatte (11) umfasst, **dadurch gekennzeichnet, dass** die mindestens eine Oberfläche (13) der Trägerplatte (11), die die Antihaftbeschichtung (12) aufweist, eine mikrogeriffelte Oberfläche ist, die Riffelungen in einem mikrometrischen Maßstab aufweist, und die Antihaftbeschichtung (12) eine kugelige Chrombeschichtung (12) ist, mit einer mikronodularen Struktur mit einer im Wesentlichen Peak-and-Valley-Morphologie, wobei die Trägerplatte (11) mindestens einen Oberflächenabschnitt (14) umfasst, der die Oberfläche (13) der Trägerplatte (11) mit der Antihaftbeschichtung (12) beinhaltet, die gehärtet und geglüht ist und eine Oberflächenhärte gleich oder höher als etwa 40 HRc, vorzugsweise im Bereich von etwa 40-60 HRc, aufweist.

2. Grillgerät (1) nach Anspruch 1, wobei die Beschichtung (12) eine äußere Kontaktfläche (16) aufweist, die eine äußere Oberfläche der Kochplatte (2) definiert und im Gebrauch direkt mit dem zu kochenden Lebensmittel in Kontakt kommt, wobei die äußere Kontaktfläche (16) eine mikrorobuste Oberfläche ist, die eine mikronodulare Morphologie mit einer Rauhigkeit im Bereich zwischen 0,5 $\mu$m und 5,0 $\mu$m, vorzugsweise zwischen 0,6-1,2 $\mu$m, aufweist.

3. Grillgerät (1) nach einem der vorhergehenden Ansprüche, wobei die kugelige Chrombeschichtung (12) eine Dicke von etwa 10-500 $\mu$m, vorzugsweise von etwa 10-100 $\mu$m, aufweist.

4. Grillgerät (1) nach einem der vorhergehenden Ansprüche, wobei die Trägerplatte (11) aus einem metallischen Material, vorzugsweise einem Material auf Eisenbasis, wie etwa Stahl, hergestellt ist.

5. Grillgerät (1) nach einem der vorhergehenden Ansprüche, wobei die Antihaftbeschichtung (12) eine innere Verbindungsfläche (15) aufweist, die der äußeren Kontaktfläche (16) gegenüberliegt und direkt und innig an der Oberfläche (13) der Trägerplatte (11) mit der Antihaftbeschichtung (12) anhaftet.

6. Grillgerät (1) nach Anspruch 2 oder einem der vorhergehenden Ansprüche 3 bis 5, wenn abhängig von Anspruch 2, umfassend einen Grundkörper (3) und eine beweglichen Abdeckung (5), die in Bezug auf den Grundkörper (3) beweglich ist, wobei die nichthaftende Kochplatte (2) eine obere Kochplatte (2b) ist, die von der beweglichen Abdeckung (5) getragen wird.

7. Grillgerät (1) nach Anspruch 6, wobei der Grundkörper (3) jeweils mit einer nichthaftende Kochplatte (2a) versehen ist.

8. Verfahren zur Herstellung einer nichthaftenden Kochplatte (2) eines Grillgeräts (1), das die Schritte des Bereitstellens einer Trägerplatte (11) und des Aufbringens einer kugeligen Chrombeschichtung (12), die eine mikronodulare Struktur mit einer im Wesentlichen Peak-and-Valley-Morphologie aufweist, auf mindestens einer Oberfläche (13) der Trägerplatte (11), wobei das Verfahren vor dem Schritt des Aufbringens der kugeligen Chrombeschichtung (12) einen Schritt des Aufrauens der Oberfläche (13) umfasst, auf der die kugelige Chrombeschichtung (12) aufgebracht werden soll, um eine mikrogeriffelte, robuste Oberfläche zu erhalten, auf der dann die kugelige Chrombeschichtung (12) abgeschieden wird, wobei das Verfahren vor dem Schritt des Aufrauens der Oberfläche (13), auf der die kugelige Chrombeschichtung (12) aufgebracht werden soll, vor dem Schritt des Aufrauens der Oberfläche (13), auf der die kugelige Chrombeschichtung (12) aufgebracht werden soll, einen Schritt des Härtens und einen anschließenden Schritt des Glühens der Trägerplatte (11) umfasst, um die Oberfläche (13), auf der die kugelige Chrombeschichtung (12) aufgebracht werden soll, mit einer Härte gleich oder höher als etwa 40 HRc, und vorzugsweise im Bereich von etwa 40-60 HRc, zu versehen.

9. Verfahren nach Anspruch 8, wobei die Trägerplatte (11) aus einem metallischen Material, vorzugsweise aus einem Material auf Eisenbasis, wie etwa Stahl, hergestellt ist.

10. Verfahren nach Anspruch 8 oder 9, wobei die kugelige Chrombeschichtung (12) durch Verchromen, vorzugsweise in einem elektrolytischen Bad, der Oberfläche (13) der Trägerplatte (11), auf der die kugelige Chrombeschichtung (12) aufgebracht werden soll, abgeschieden wird.

11. Verfahren nach Anspruch 8 oder 9 oder 10, wobei der Schritt des Aufrauens durch Strahlen der Oberfläche (13), auf der die kugelige Chrombeschichtung (12) aufgebracht werden soll, vorzugsweise mit Keramikkugeln mit einem Durchmesser von etwa 10-1000 μm und vorzugsweise von 30-100 μm durchgeführt wird.

12. Verfahren nach einem der Ansprüche 8 bis 11, wobei der Schritt des Härtens das Karbonitrieren der Trägerplatte (11) in einem Ofen und das Tempern der Trägerplatte (11) umfasst.


**Revendications**

1. Appareil à griller (1) comprenant au moins une plaque de cuisson antiadhésive (2) comprenant une plaque de support (11) et un revêtement antiadhésif (12) sur au moins une surface (13) de la plaque de support (11), **caractérisé en ce que** la au moins une surface (13) de la plaque de support (11) ayant ledit revêtement antiadhésif (12) est une surface micro-ondulée présentant des ondulations à l'échelle micrométrique et le revêtement antiadhésif (12) est un revêtement de chrome nodulaire (12), ayant une structure micro-nodulaire avec une morphologie sensiblement en crêtes et creux, dans lequel la plaque de support (11) comprend au moins une partie de surface (14), incluant ladite surface (13) de la plaque de support (11) ayant ledit revêtement antiadhésif (12), qui est durci et recuit, et possède une dureté superficielle égale ou supérieure à environ 40 HRc, de préférence comprise dans la plage d'environ 40-60 HRc.

2. Appareil à griller (1) selon la revendication 1, dans lequel le revêtement (12) présente une surface de contact externe (16) qui définit une surface externe de la plaque de cuisson (2) et vient directement en contact, en utilisation, avec les aliments à cuire, ladite surface de contact externe (16) étant une surface micro-rugueuse, ayant une morphologie micronodulaire, avec une rugosité comprise entre 0,5 g et 5,0 μm, de préférence entre 0,6-1,2 μm.

3. Appareil à griller (1) selon une des revendications précédentes, dans lequel le revêtement de chrome nodulaire (12) a une épaisseur d'environ 10-500 μm, de préférence d'environ 10-100 μm.

4. Appareil à griller (1) selon une des revendications précédentes, dans lequel la plaque de support (11) est réalisée en un matériau métallique, de préférence un matériau à base de fer tel que l'acier.

5. Appareil à griller (1) selon une des revendications précédentes, dans lequel ledit revêtement antiadhésif (12) présente une surface intérieure de couplage (15), opposée à ladite surface extérieure de contact (16) et adhérant directement et intimement à ladite surface (13) de la plaque de support (11) comportant ledit revêtement antiadhésif (12).

6. Appareil à griller (1) selon la revendication 2 ou une quelconque des revendications précédentes 3 à 5 lorsqu'elles dépendent de la revendication 2, comprenant un corps de base (3) et un couvercle mobile (5) déplaçable par rapport au corps de base (3), dans lequel la plaque de cuisson antiadhésive (2) est une plaque de cuisson supérieure (2b) supportée par le couvercle mobile (5).

7. Appareil à griller (1) selon la revendication 6, dans lequel le corps de base (3) est muni d'une plaque de cuisson antiadhésive respective (2a)

8. Procédé de fabrication d'une plaque de cuisson antiadhésive (2) d'un appareil à griller (1) comprenant les étapes de fourniture d'une plaque de support (11), et d'application d'un revêtement de chrome nodulaire (12), ayant une micro- structure nodulaire à morphologie sensiblement en crêtes et creux, sur au moins une surface (13) de la plaque de support (11), ledit procédé comprenant, avant l'étape d'application du revêtement de chrome nodulaire (12), une étape de dégrossissage de ladite surface (13) sur laquelle doit être appliqué ledit revêtement de chrome nodulaire (12), pour obtenir une surface rugueuse micro-ondulée, sur laquelle le revêtement de chrome nodulaire (12) est ensuite déposé , ledit procédé comprenant, avant l'étape de dégrossissage de ladite surface (13) sur laquelle doit être appliqué ledit revêtement de chrome nodulaire (12), une étape de durcissement et une étape ultérieure de recuit de la plaque de support (11) de manière à conférer à ladite surface (13) sur laquelle ledit revêtement de chrome nodulaire (12) doit être appliqué une dureté égale ou supérieure à environ 40 HRc, et de préférence dans la plage d'environ 40-60 HRc.

9. Procédé selon la revendication 8 dans lequel la plaque de support (11) est réalisée en un matériau métallique, de préférence un matériau à base de fer tel que l'acier.

10. Procédé selon la revendication 8 ou 9, dans lequel le revêtement de chrome nodulaire (12) est déposé par chromage, de préférence dans un bain électrolytique, ladite surface (13) de la plaque de support (11) sur laquelle ledit revêtement de chrome nodulaire (12) doit être appliqué.

11. Procédé selon la revendication 8 ou 9 ou 10, dans lequel l'étape de dégrossissage est réalisée par grenaillage de ladite surface (13) sur laquelle doit être appliqué ledit revêtement de chrome nodulaire (12), de préférence avec des billes de céramique ayant un diamètre d'environ 10-1000 μm et de préférence de 30-100 μm.

12. Procédé selon une des revendications 8 à 11, dans lequel ladite étape de durcissement comprend la carbonitruration de la plaque de support (11) dans un four et la trempe de la plaque de support (11).

**Fig 1**

**Fig 2**

Fig. 3

Fig. 4

**Fig. 5**

Fig. 6

**EP 3 117 746 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008043127 A1
- US 20010042448 A1
- EP 1712167 A
- US 5753313 A